## Europäisches Patentamt

(19) **European Patent Office**

**Office européen des brevets**

(11) Publication number: **0 263 407 B1**

(12) # EUROPEAN PATENT SPECIFICATION

(45) Date of publication of the patent specification: **22.11.90**

(51) Int. Cl.5: **C03B 37/08, C03B 37/075**

(21) Application number: **87114185.9**

(22) Date of filing: **29.09.87**

(54) Novel hollow fiber bushing and method of making hollow fibers.

(30) Priority: **02.10.86 US 914415**

(43) Date of publication of application:
**13.04.88 Bulletin 88/15**

(45) Publication of the grant of the patent:
**22.11.90 Bulletin 90/47**

(84) Designated Contracting States:
**BE CH DE FR GB IT LI NL**

(56) References cited:
**DE-C- 526 900**
**US-A- 3 510 393**

(73) Proprietor: **PPG INDUSTRIES, INC., One PPG Place, Pittsburgh Pennsylvania 15272(US)**

(72) Inventor: **Jensen, Thomas Hulegaard, 4221 Burnett Drive, Murrysville, Pa. 15668(US)**

(74) Representative: **Sternagel, Hans-Günther, Dr. et al, Patentanwälte Dr. Michael Hann Dr. H.-G. Sternagel Sander Aue 30, D-5060 Bergisch Gladbach 2(DE)**

## Description

The present invention relates to the production of hollow glass fibers. More particularly, the present invention relates to apparatus and methods used in producing hollow fibers having more uniform ratios of internal to external diameters.

In US–A 3 510 393, from which the pre-characterising parts of claims 1, 5 and 9 are known, a hollow glass fiber strand article is described. Hollow glass fibers of the claimed strands typified in this patent are fibers having outside diameters of 0.00762 to 0.0762 mm (0.0003 to 0.003 inches) and having 10 to 65 percent of their volume hollow. The hollow glass fibers described in the aforementioned patent found use in filament wound application, such as a resin reinforcement for radar domes, and may also be used as a resin reinforcement for motor cases, storage tanks and the like. The advantage of hollow glass fibers was to provide a significant improvement in the strength to weight ratio of reinforcing fibers utilized to reinforce composites. Also provided, as stated in the aforementioned patent, was a significant reduction in the dielectric constant of materials reinforced with the hollow glass fibers of the patent over those reinforced with solid fibers.

In US-A 3 268 313 apparatus suitable for use in manufacturing the hollow glass fibers in the aforementioned patent is shown. Similarly, in US-A 3 421 873 alternative apparatus and methods are described where fibers can be produced which have intermittent hollowness along their length.

While the aforementioned apparatus, methods and fibers have found some utility in the market place, their use has been limited due to several factors. One factor was the high cost of preparing the hollow glass fibers. This cost was high due to the fact that the apparatus was difficult to operate on a continuous basis without many process interruptions occurring during the formation of the fibers. The manufacturing costs consequently required high selling prices which was a deterrent in the marketplace. Further, the fibers produced by the processes and apparatus described in these patents, while hollow when initially produced from commercial size bushings, after a period of time produced were found to contain a significant large number of solid fibers as well as hollow glass fibers. Still further, the hollow glass fibers produced in a multiple fiber strand had little or no uniformity with respect to the concentricity of the central lumen of the fibers. Stated another way, the K value of the fibers, that is the ratio of the inside diameter of the central lumen of the fiber to the outside diameter of the hollow fiber was found to be very erratic and subject to wide variations in any given strand of fibers produced.

Thus, despite the advent of the processes in the prior art to manufacture hollow glass fibers, the need still exists for processes and apparatus for producing hollow glass fibers of more uniform configuration and quality. Hollow glass fiber strands containing hollow filaments or fibers therein which possess more uniform ratios of inside to outside diameters and better concentricity of the central lumen are still a desired goal.

The object of the invention is to provide an apparatus and a method for producing glass fibers having K values more uniform than those heretofore obtainable.

This object is attained by an apparatus for producing hollow glass fibers comprising a source of molten glass, a bushing having a plurality of orifices therethrough for passage of molten glass streams from said source, a plurality of tubes extending into each orifice and said tubes restricting the orifices to form an annulus therein and having a central gas passageway therein throughout the length of the orifice and means for feeding gas to said tubes characterized by the tubes terminating in the same plane as the terminus of said orifices and the diameter of said passageway and the diameter of the orifice being such that they correspond to the ratio of the internal diameter to the external diameter desired in the fibers drawn from said apparatus and the means for feeding gas to said tubes being designed to feed the gas at a regulable or controlled pressure.

In accordance with this invention also a process for producing improved hollow glass fibers is provided.

This method of forming hollow glass fibers comprising feeding molten glass from a molten glass source through a plurality of fiber forming tips passing a gas stream through a tube positioned inside of and concentric with the walls of said tips to thereby cause molten glass to pass through an annulus around said tube, passing gas through the center of the molten glass as it exits the tip at a pressure sufficient to provide a hollow concentrical lumen is characterized in that an air column is established having a diameter in relation to the outside diameter of the annulus that is substantially the same as the ratio of internal to external diameter of the fibers formed in said glass cone as it solidifies in the atmosphere and choosing the diameter of the tube and the diameter of the tip to a value which provide the same ratio in said bushing tip, the tubes terminating in the same plane as the terminus of the fiber forming tips.

The fibers made by the process are characterized in their new form by having a better concentricity in the central lumen than heretofore possible and more uniform K values than fibers heretofore produced. This results in a more uniform strength to weight ratio when these fibers are utilized in composites to provide strength to such materials as thermoset and thermoplastic resins. The novel apparatus described to produce the improved hollow fibers is durable, simple in construction and provides consistent fiber quality during the bushing life.

In another aspect, the invention involves providing a hollow fiber forming bushing, wherein a gas is fed to molten glass emanating from the bushing, through a multiplicity of hollow tips depending from the bushing, each tip having a tube with a centrally defined gas passage therein, forming with the walls of said tips an annulus through said tips for glass to pass therethrough and means to pass gas through said tubes, characterized in that the tubes terminate in the same plane as the terminus of the hollow tips of the bushing and the diameter of the gas passage and the diameter of the annulus are chosen to provide a ratio corresponding to the ratio of internal diameter to external diameter in the hollow fiber produced by said bushing, generally in the range of 0.5 to 0.9, preferably between 0.6 and 0.8.

Brief Description of the Drawing

For a more complete understanding of the present invention, reference is made to the accompanying drawing in which;

Fig. 1 is a side elevation of a bushing suitable for producing improved hollow glass fibers, and;

Fig. 2 is a front elevation of a bushing constructed in accordance with the instant invention to provide improved hollow glass fibers.

Detailed Description of the Drawing

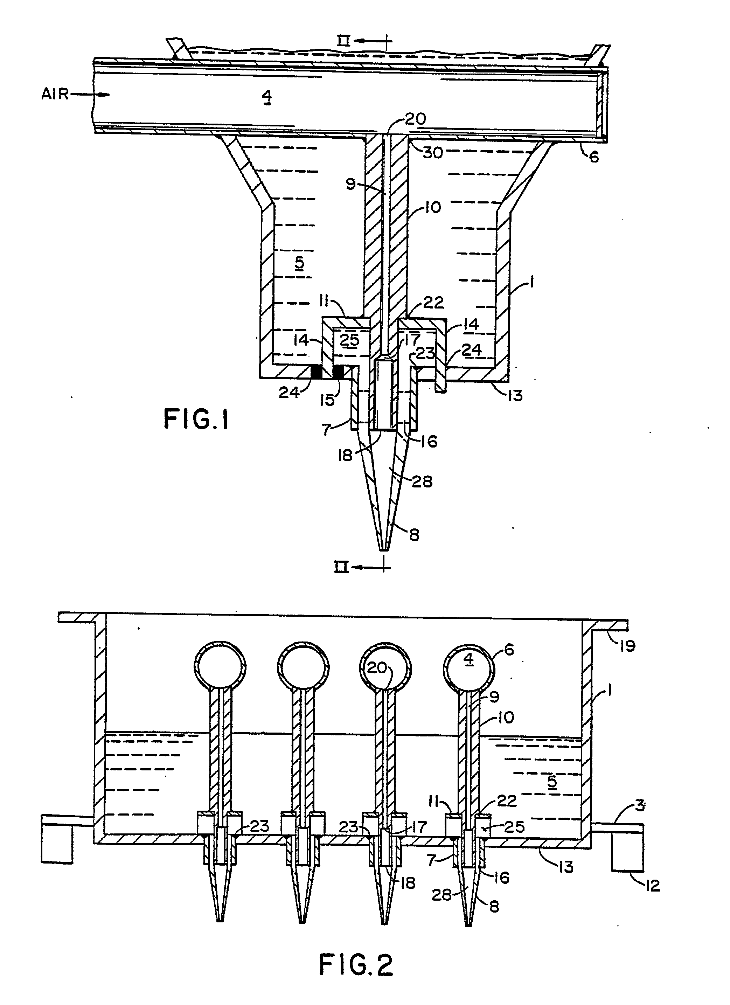

In the accompanying drawing looking at Figs. 1 and 2 there is shown a bushing indicated at 1, having a tip plate, faceplate or bottom member 13 (hereinafter called tip plate), in which are positioned as shown in Fig. 2 four bushing tips 7. While four tips are shown in Fig. 2 it will be of course understood by the skilled artisan more than the four tips shown can be employed, if desired. Thus, while the bushing in Fig. 2 contains four fiber forming tips it will be understood by the skilled artisan that the number of tips can be increased to any suitable number to provide the requisite number of filaments per strand desired for a given strand product. Positioned concentric with the inside walls of the bushing tip 7 and located centrally therein is an gas delivery tube 10 having a central channel 9 communicating with an air passageway 4 in an air manifold member 6. Again as shown in the drawing of Fig. 2, each air manifold 6 is shown feeding a single bushing tip through a single gas delivery tube 10 which in turn feeds a single bushing tip 7. In practice in a large bushing, where multiple bushing tips are typically arranged in rows, the gas manifold 6 and its associated gas chamber 4 would feed multiple, aligned tubes 10 which would be located in and feed a multiplicity of tips 7.

At the base, the gas delivery tube 10 is internally chamfered to an opening a 17 which is larger in diameter than the conduit 9 through which gas is introduced to opening 17. Conduit 9 and the tip 7 terminate in the same horizontal plane and discharge their contents to the atmosphere in that same horizontal plane. The arrangement of the outside wall of the concentric tube 10 and interior walls of the tip 7 provide an annulus 16, which surrounds the bottom section of the tube 10. The annulus 16 provides a passageway through which glass accumulating in the area 25 of the bushing tip is passed outside of the bushing proper to the atmosphere. As can be seen clearly in the drawing of Fig. 1, the glass emanating from the annulus 16 and the air leaving chamber 17 at 18 enter the atmosphere together. An important consideration in providing the gas tube 10 with the expanded bottom section for the introduction of air is to establish an air column having a diameter in relation to the outside diameter of the annulus that is substantially the same as the ratio of internal to external diameter desired in the final hollow product. Thus, providing this desired ratio within the bushing tip it is found that the glass cone 8 in its final solidified filament form possesses a ratio of lumen diameter to external fiber diameter approximately the same as the ratio of the internal diameter of gas conduit 9 at point 18 to the internal diameter of tip 7. By machining the tip 7 and tube 10 such that the diameter of opening 18 in conduit 9 and the internal diameter of tip 7 are correlated to provide a ratio of internal lumen to external fiber diameter that is desired in the final product, hollow glass fibers of that approximate desired ratio will be readily obtained.

In the preferred construction of the bushing in accordance with the instant invention a bracket member 11 is provided around the external surface of the gas delivery tube 10. Holes 24 are provided in tip plate 13 and the side, pieces or tabs 14 of the bracket member 11 are inserted through the holes 24 in the faceplate 13. One of these tabs is shown inserted through the hole 24 on the right hand side of Fig. 1. The configuration shown on the left hand side of the same figure shows the finished version of this bracket member. Thus, the bracket 14 as shown on the right hand side of the drawing is inserted through the hole 24 in the bushing tip plate 13. After insertion a welding torch is applied to the surface of the tab 14 which is protruding below the tip plate 13 and it is heated to its melting point. The tab 14 is designed in mass so that when heat is applied and the metal melts, it forms the button 15 shown on the left hand side of Fig. 1 in the tip plate thereby becoming a part of that tip plate. In finished form, the right side of the orifice in Fig. 1 will look the same as the left side as shown. The arms 14 of the bracket 11 become an integral part of the tip plate 13 and the upper section of the bracket 11 is welded to the outside wall of the gas delivery tube 10 at weld 22. This arrangement coupled with the rigid attachment of tube 10 through wall 30 to gas conduit 6 provides a truss arrangement for the tip plate 13. Since the bracket ends are now an integral part of the faceplate 13, movement of the faceplate 13 due to any slight warpage over time during use will be minimized and will cause the delivery tube 10 to move in any direction that the tip 7 moves as a result of such warpage. Furthermore, the described truss arrangement is such that it provides a tip plate that has a substantially reduced tendency to sag thereby maintaining the tube 10 and tip 7 spatially constant with respect to each other during use. The tips 7 are welded to the faceplate 13 at welds 23 in a manner conventional to those skilled in the art. The bushing 1 itself is electrically heated as shown in Fig. 2. This heat is applied through a suitable bushing connector 3 which is connected to an electrical terminal 12. The terminal 12 is normally attached to the secondary of a power transformer not shown but this arrangement is well understood by those skilled in the art, and can be readily found in the book "The Manufacturing Technology of Continuous Glass Fibers", by K. L. Lowenstein, Elsevier Publishing Co., 1973, Chapter V.

In conducting the process of the instant invention, molten glass from a suitable glass source is passed into the bushing 1 and passes downwardly through the area 25 above each of the bushing tips 7 and out to the atmosphere through annulus 16 in each of the bushing tips 7. A gas stream, preferably air, is passed through manifold 6 via conduit 4 through the central passageway 9 into an air delivery tube 10 associated with each of the bushing tips 7. This air is passed downwardly in passageway 9 of tube 10 to the flared opening 17, and exits the tips at the same horizontal planar level as the molten glass emanating from through annulus 16. By flaring the opening of the passageway 9 at point 17 in the manner shown in the drawing the air stream exiting the end of tip 7 at 18 is larger in diameter than heretofore used in the aforementioned prior art patents. This provision of a larger diameter for the gas avoids the characteristic bulging of the cone of molten glass as shown by the prior art exemplified by US-A 3 268 313. Further, less air pressure is required to form the fiber lumen in the glass cone used to form the fibers with this arrangement. A more stable attenuation process is therefore achieved and more uniform and concentric lumens are provided in the glass fibers because the diameter of the air stream and the glass stream at the tip at point 18 are in approximately the same proportion as the desired end product, a condition which is not found to be true in the above referred to prior art. The lumen of the fibers formed are centrally located and are constantly in the same position regardless of whether or not the bushing tip plate should distort. The firm connection between the bracket member 11, the bushing tip plate 13 and the tube 10 maintains their spatial relationship constant. The welds 22 between the tube 10 and the bracket member 11 and the solid connection or button 15 formed by the side arm tabs 14 of the brackets 11 in the holes 24 provided in the faceplate for the tabs 14 and the welded attachment of conduit 6 to tube 10 at the other end provide a rigid, secure, truss-type attachment which substantially supports the tip plate 13 during use to help prevent any substantial distortion of the tip plate, thus keeping the tube 10 and the tip 7 in their constructed spatial relationship during operation.

The bushing 1 of the figures shown may be constructed of any suitable bushing material utilized by the current state of the art. Typically the bushings utilized in the instant application are constructed of precious metals, primarily platinum and platinum-rhodium alloy. An 80% platinum 20% rhodium alloy by weight is the preferred bushing material and is utilized not only for the bushing but for all other associated equipment such as the air distribution tubes, manifolds and so forth. Any surface in contact with the molten glass is thus in general a platinum rhodium alloy or its equivalent. Recourse to the utilization of zirconia stabilized or other grain stabilized platinum or platinum alloys may also be had as well as recourse to ceramic coatings on the bushing and exterior supports where glass fiber compositions requiring heat in the bushing above 1260°C (2300°F) are required.

Satisfactory hollow fibers may be produced utilizing the bushing and method herein described. In general, any glass composition which can be formed into a glass fiber will satisfactorily produce hollow fibers in accordance with the novel apparatus of the instant invention.

## Claims

1. Apparatus for producing hollow glass fibers comprising a source of molten glass, a bushing (1) having a plurality of orifices therethrough for passage of molten glass streams from said source (25), a plurality of tubes (10) extending into each orifice and said tubes (10) restricting the orifices to form an annulus (16) therein and having a central gas passageway (9) therein throughout the length of the orifice and means (4, 6) for feeding gas to said tubes (10) characterized by the tubes (10) terminating in the same plane as the terminus of said orifices and the diameter of said passageway (9) and the diameter of the orifice being such that they correspond to the ratio of the internal diameter to the external diameter desired in the fibers drawn from said apparatus and the means (4, 6) for feeding gas to said tubes (10) being designed to feed the gas at a regulable or controlled pressure.

2. Apparatus of claim 1, wherein the ratio of the inside diameter of said tube (10) and the inside diameter of said orifice is between 0.5 and 0.9.

3. Apparatus of claim 1, wherein the ratio of the inside diameter of said tube (10) and the inside diameter of said orifice is between 0.6 and 0.8.

4. Apparatus of claim 1–3, including means (11, 14) to attach each end of said tube (10) to said bushing (1) adjacent their respective orifice to insure that there is no relative movement between orifice and associated tube.

5. A hollow fiber forming bushing (1), wherein a gas is fed to molten glass emanating from the bushing, through a multiplicity of hollow tips (7) depending from the bushing, each tip (7) having a tube (10) with a centrally defined gas passage (9) therein, forming with the walls of said tips (7) an annulus (16) through said tips (7) for glass to pass therethrough and means (4, 6) to pass gas through said tubes (10), characterized in that the tubes (10) terminate in the same plane as the terminus of the hollow tips (7) of the bushing and the diameter of the gas passage and the diameter of the annulus are chosen to provide a ratio corresponding to the ratio of internal diameter to external diameter in the hollow fiber produced by said bushing.

6. The bushing of claim 5, wherein the regulated ratio is between 0.5 and 0.9.

7. The bushing of claim 5, wherein the regulated ratio is between 0.6 and 0.8.

8. The bushing of claim 5–7, including means (11, 14) to attach each of said tubes (10), to the bushing (1) adjacent each of their respective tips (7) to insure that there is no relative movement between the tips and the tubes.

9. A method of forming hollow glass fibers comprising feeding molten glass from a molten glass source through a plurality of fiber forming tips (7) passing a gas stream through a tube (10) positioned inside of and concentric with the walls of said tips to thereby cause molten glass to pass through an annulus (16) around said tube, passing gas through the center of the molten glass as it exits the tip at a pressure sufficient to provide a hollow concentrical lumen characterized in that an air column is established having a diameter in relation to the outside diameter of the annulus that is substantially the same as the ratio of internal to external diameter of the fibers formed in said glass cone as it solidifies in the atmosphere and choosing the diameter of the tube and the diameter of the tip to a value which provide the same ratio in said bushing tip, the tubes terminating in the same plane as the terminus of the fiber forming tips.

10. The method of claim 9, wherein the diameter of the tube (10) and the diameter of the tip (7) are sized to provide a fiber having an internal diameter to external diameter ratio of 0.5 to 0.9.

11. The method of claim 10, wherein the diameter of the tube (10) and the diameter of the tip (7) are sized to provide a fiber having an internal diameter to external diameter ratio of 0.6 to 0.8.

## Patentansprüche

1. Vorrichtung zum Herstellen von hohlen Glasfasern mit einer Quelle geschmolzenen Glases, einer Düse (1), die eine Vielzahl von hindurchgehenden Öffnungen zum Durgang von Strömen geschmolzenen Glases von der Quelle (25) aufweist, mit einer Vielzahl von Rohren (10), die sich in jede Öffnung erstrecken, und wobei die Rohre (10) die Öffnungen unter Ausbildung eines Ringraumes (16) einschränken, und mit einem darin angeordneten zentralen Gasdurchlaßweg (9) durch die Länge der Öffnung und Einrichtungen (4, 6), um den Rohren (10) Gas zuzuführen, dadurch gekennzeichnet, daß die Rohre (10) in der gleichen Ebene enden wie die Enden der Öffnungen, und der Durchmesser des Durchlaßweges (9) und der Durchmesser der Öffnung derart sind, daß sie dem Verhältnis des gewünschten Innendurchmessers:Außendurchmesser der aus der Vorrichtung gezogenen Fasern entsprechen und die Einrichtungen (4, 6) zum Zuführen von Gas zu den Rohren (10) zum Zuführen des Gases mit einem regelbaren oder gesteuerten Druck ausgebildet sind.

2. Vorrichtung nach Anspruch 1, dadurch gekennzeichnet, daß das Verhältnis des Innendurchmessers des Rohres (10) und des Innendurchmessers der Öffnung zwischen 0,5 und 0,9 beträgt.

3. Vorrichtung nach Anspruch 1, dadurch gekennzeichnet, daß das Verhältnis des Innendurchmessers des Rohres (10) und des Innendurchmessers der Öffnung zwischen 0,6 und 0,8 beträgt.

4. Vorrichtung nach Anspruch 1–3, dadurch gekennzeichnet, daß Einrichtungen (11, 14) vorhanden sind, um jedes Ende des Rohres (10) mit der Düse (1) neben der entsprechenden Öffnung zu befestigen, um sicherzustellen, daß keine relative Bewegung zwischen Öffnung und damit verbundenem Rohr stattfindet.

5. Düse (1) zum Herstellen hohler Fasern, bei dem ein Gas dem aus der Düse durch eine Vielzahl an der Düse hängender hohler Spitzen (7) ausströmenden, geschmolzenen Glas zugeführt wird, wobei jede Spitze (7) ein Rohr (10) mit einem darin angeordneten zentralen Gasdurchlaßweg (9) aufweist, das mit den Wänden der Spitzen (7) einen Ringraum (16) durch die Spitzen (7) ausbildet zum Hindurchleiten von Glas, und mit Einrichtungen (4, 6), um Gas durch die Rohre (10) zu leiten, dadurch gekennzeichnet, daß die Rohre (10) in der gleichen Ebene enden wie die Enden der hohlen Spitzen (7) der Düse, und der Durchmesser des Gasdurchlaßweges und der Durchmesser des Ringraumes so gewählt sind, daß ein Verhältnis gegeben ist, das dem Verhältnis des Innendurchmessers:Außendurchmesser der mit der Düse herzustellenden hohlen Faser entspricht.

6. Düse nach Anspruch 5, dadurch gekennzeichnet, daß das eingestellte Verhältnis zwischen 0,5 und 0,9 beträgt.

7. Düse nach Anspruch 5, dadurch gekennzeichnet, daß das eingestellte Verhältnis zwischen 0,6 und 0,8 beträgt.

8. Düse nach Anspruch 5–7, dadurch gekennzeichnet, daß Einrichtungen (11, 14) vorhanden sind, um jedes der Rohre (10) mit der Düse (1) neben jeder der entsprechenden Spitzen (7) zu befestigen, um sicherzustellen, daß keine relative Bewegung zwischen den Spitzen und den Rohren stattfindet.

9. Verfahren zum Herstellen von hohlen Glasfasern durch Führen von geschmolzenem Glas von einer Quelle geschmolzenen Glases durch eine Vielzahl von faserbildenden Spitzen (7), Hindurchleiten eines Gasstromes durch ein im Inneren der und konzentrisch zu den Wänden der Spitzen angeordnetes Rohr (10), so daß das geschmolzene Glas durch einen Ringraum (16) um das Rohr gelangt, und Hindurchleiten von Gas durch das Zentrum des geschmolzenen Glases, wenn es aus der Spitze austritt unter einem ausreichenden Druck, um ein hohles, konzentrisches Lumen auszubilden, dadurch gekennzeichnet, daß eine Luftsäule geschaffen wird, die einen Durchmesser im Verhältnis zum Außendurchmesser des Ringraumes aufweist, das im wesentlichen das gleiche ist wie das Verhältnis von Innendurchmesser:Außendurchmesser der im Glaskegel bei seiner Verfestigung in der Atmosphäre gebildeten Fasern, und Auswählen des Durchmessers des Rohres und des Durchmessers der Spitze mit einem Wert, der das gleiche Verhältnis in der Düsenspitze ergibt, wobei die Rohre in der gleichen Ebene enden wie die Enden der faserbildenden Spitzen.

10. Verfahren nach Anspruch 9, dadurch gekennzeichnet, daß der Durchmesser des Rohres (10) und der Durchmesser der Spitze (7) eine Größe aufweisen, die eine Faser mit einem Verhältnis von Innendurchmesser:Außendurchmesser von 0,5 bis 0,9 ergibt.

11. Verfahren nach Anspruch 10, dadurch gekennzeichnet, daß der Durchmesser des Rohres (10) und der Durchmesser der Spitze (7) eine Größe aufweisen, die eine Faser mit einem Verhältnis von Innendurchmesser:Außendurchmesser von 0,6 bis 0,8 ergibt.

**Revendications**

1. Appareil de production de fibres de verre creuses, comprenant une source de verre fondu, une filière (l) traversée d'une multiplicité d'orifices destinés au passage de courants de verre fondu à partir de ladite source (25),
– une multiplicité de tubes (10) s'étendant dans chaque orifice, les tubes (10) limitant les orifices de manière à former un anneau (16) dans ceux-ci et possédant un passage à gaz central (9) sur toute la longueur de l'orifice et un dispositif (4, 6) pour alimenter les tubes (10) en gaz, caractérisé en ce que les tubes (10) se terminent dans le même plan que l'extrémité terminale des orifices précités et le diamètre du passage (9) et le diamètre de l'orifice sont tels qu'ils correspondent au rapport du diamètre interne au diamètre externe souhaité dans les fibres étirées à partir de l'appareil précité et le dispositif (4, 6) pour l'alimentation des tubes (10) en gaz est conçu pour débiter le gaz à une pression susceptible d'être réglée, contrôlée ou régulée.

2. Appareil suivant la revendication 1, caractérisé en ce que le rapport du diamètre interne du tube (10) précité et du diamètre interne de l'orifice précité varie de 0,5 à 0,9.

3. Appareil suivant la revendication 1, caractérisé en ce que le rapport du diamètre interne du tube (10) au diamètre interne de l'orifice précité varie de 0,6 à 0,8.

4. Appareil suivant les revendications 1 à 3, caractérisé en ce qu'il comprend des dispositifs (11, 14) destinés à attacher chaque extrémité du tube (10) précité à la filière (1) au voisinage de leurs orifices respectifs pour garantir qu'il ne se produise pas de mouvement relatif entre l'orifice et son tube associé.

5. Filière (1) destinée à la formation de fibres creuses, où l'on fournit du gaz à du verre fondu sortant de la filière, par l'intermédiaire d'une multiplicité de tétons creux (7) faisant saillie de la filière, chaque téton (7) comportant un tube (10) pourvu d'un passage (9) à gaz central, formant avec les parois des tétons (7) un anneau (16) à travers les tétons (7) de manière à ce que du verre puisse passer à travers lui, et des dispositifs (4, 6) pour faire passer du gaz à travers les tubes (10), caractérisé en ce que les tubes (10) se terminent dans le même plan que l'extrémité terminale des tétons creux (7) de la filière et on choisit le diamètre du passage à gaz et le diamètre de l'anneau de façon à obtenir un rapport correspondant au rapport du diamètre interne et du diamètre externe dans la fibre creuse engendrée par la filière précitée.

6. Filière suivant la revendication 5, caractérisée en ce que le rapport régulé varie de 0,5 à 0,9.

7. Filière suivant la revendication 5, caractérisée en ce que le rapport régulé varie de 0,6 à 0,8.

8. Filière suivant les revendications 5–7, comprenant des dispositifs (11, 14) pour attacher chacun des tubes (10) précités à la filière (1) au voisinage de chacun de leurs tétons respectifs (7), afin de garantir qu'il ne se produise pas de mouvement relatif entre les tétons et les tubes.

9. Procédé de formation de fibres de verre creuses, consistant à faire passer du verre fondu depuis une source de verre fondu à travers une multiplicité de tétons (7) formateurs de fibres, à faire passer un courant de gaz a travers un tube (10) logé à l'intérieur des parois des tétons précités et concentrique à ces parois, de manière à provoquer ainsi le passage du verre à travers un anneau (16) autour du tube précité, à faire passer du gaz à travers le centre du verre fondu lorsqu'il sort du téton sous une pression qui suffit à réaliser un passage concentrique creux, caractérisé en ce que on établit une colonne d'air possédant un diamètre, par rapport au diamètre externe de l'anneau, qui est sensiblement le même que le rapport du diamètre interne au diamètre externe des fibres formées dans le cône de verre lorsqu'il se solidifie dans l'atmosphère et on choisit le diamètre du tube et le diamètre du téton de façon à ce qu'ils possèdent une valeur qui donne le même rapport dans ledit téton de filière, les tubes se terminant dans le même plan que l'extrémité terminale des tétons formateurs de fibres.

10. Procédé suivant la revendication 9, caractérisé en ce que l'on calibre le diamètre du tube (10) et le diamètre du téton (7) de façon à ce que l'on obtienne une fibre possédant un rapport du diamètre interne au diamètre externe de 0,5 à 0,9.

11. Procédé suivant la revendication 10, caractérisé en ce que l'on calibre le diamètre du tube (10) et le diamètre du téton (7) de façon à ce que l'on obtienne une fibre possédant un rapport du diamètre interne au diamètre externe de 0,6 à 0,8.

FIG.1

FIG.2